# EUROPÄISCHE PATENTSCHRIFT

(11) **EP 3 759 750 B1**
(45) Veröffentlichungstag und Bekanntmachung des Hinweises auf die Patenterteilung: **27.08.2025**
(21) Anmeldenummer: 19702345.0
(22) Anmeldetag: 17.01.2019
(51) Int. Cl.: H01M 4/04, H01M 10/04, B32B 3/06, B23K 26/08, B32B 38/00, H01M 10/052

(54) **VERFAHREN UND VORRICHTUNG ZUM FLIESSFERTIGEN VON ELEKTRODEN FÜR EINE BATTERIE**
METHOD AND DEVICE FOR THE FLOW PRODUCTION OF ELECTRODES FOR A BATTERY
PROCÉDÉ ET DISPOSITIF DESTINÉS À FABRIQUER À LA CHAÎNE DES ÉLECTRODES POUR UNE BATTERIE

(30) Priorität: 01.03.2018 DE 102018203033
(43) Veröffentlichungstag der Anmeldung: 06.01.2021
(73) Patentinhaber: Robert Bosch GmbH, 70442 Stuttgart (DE)
(72) Erfinder: BETZITZA, Thomas, 71272 Renningen (DE); KANSTINGER, Adina Kerstin, 71732 Tamm (DE); DIESSNER, Christian, 75417 Muehlacker-Muehlhausen (DE)
(86) Internationale Anmeldenummer: PCT/EP2019/051108
(87) Internationale Veröffentlichungsnummer: WO 2019/166150

(56) Entgegenhaltungen:
- DE-A1- 102013 207 353
- DE-A1- 102015 218 533
- US-A1- 2002 104 412

## Beschreibung

### Gebiet der Erfindung

Die Erfindung betrifft ein Verfahren und eine Vorrichtung zum Fließfertigen von Elektroden für eine Batterie.

### Stand der Technik

Zum Herstellen von Elektroden einer Batterie werden die Elektroden beispielsweise aus Endlosmaterial herausgeschnitten und anschließend einzeln weiter bearbeitet, bevor Anoden und Kathoden mit dazwischen angeordneten Separatoren wechselweise gestapelt werden, um einen Zellstapel der Batterie auszubilden.

Beispielsweise zeigt die JP 2011 086506 eine Herstellungsvorrichtung für laminierte Batterien mit hoher Produktivität. Die US 2012 0210549 zeigt ein Verfahren zum Herstellen der elektrischen Doppelschichtkondensatorzelle. Weiterer relevanter Stand der Technik wird in DE 10 2015 218533 A1, US 2002/104412 A1 und DE 10 2013 207353 A1 beschrieben.

### Offenbarung der Erfindung

Vor diesem Hintergrund werden mit dem hier vorgestellten Ansatz ein Verfahren zum Fließfertigen von Elektroden für eine Batterie und eine Vorrichtung zum Fließfertigen von Elektroden für eine Batterie, sowie schließlich ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, Elektroden zum Herstellen von Batterien in einer Fließfertigung zusammenhängend zu bearbeiten und erst als letzten Bearbeitungsschritt vor dem Stapeln zu vereinzeln.

Es wird ein Verfahren zum Fließfertigen von Elektroden für eine Batterie vorgestellt, das dadurch gekennzeichnet ist, dass ein bahnförmiges Ausgangsmaterial bereitgestellt wird, in einem Schritt des Strukturierens zumindest eine Streckgitterstruktur und ein Trennschnitt in das Ausgangsmaterial geschnitten werden, um benachbarte Elektrodenbereiche zu definieren, wobei das Ausgangsmaterial im Bereich der Streckgitterstruktur teilweise ungeschnitten bleibt, in einem Schritt des Streckens die Elektrodenbereiche auseinandergezogen werden, um die Streckgitterstruktur zu strecken, und in einem Schritt des Vereinzelns die Elektrodenbereiche an der Streckgitterstruktur voneinander getrennt werden, um einzelne Elektroden zu erhalten.

Ideen zu Ausführungsformen der vorliegenden Erfindung können unter anderem als auf den nachfolgend beschriebenen Gedanken und Erkenntnissen beruhend angesehen werden.

Unter einem bahnförmigen Ausgangsmaterial kann ein Bandmaterial verstanden werden, das als Endlosmaterial bezeichnet werden kann. Das Ausgangsmaterial kann beidseitig zumindest teilweise mit einem Aktivmaterial beschichtet sein. Ein Trennschnitt durchtrennt einen vollständigen Schichtaufbau des Ausgangsmaterials, also das Ausgangsmaterial und darauf angeordnete Schichten Aktivmaterial. Durch zwei benachbarte Trennschnitte wird ein zukünftiges Maß einer Elektrode festgelegt. Ein Elektrodenbereich umfasst eine Fläche einer zukünftigen Elektrode und zumindest anteilig noch zu entfernende Hilfsstrukturen. Eine Streckgitterstruktur ist eine Hilfsstruktur und weist Stege und die Stege verbindende Knoten auf. Die Stege und Knoten verbinden zwei benachbarte Elektrodenbereiche einstückig. Die Stege und Knoten werden durch in versetzten Reihen angeordnete, zueinander beabstandete und von Reihe zu Reihe versetzte Schnitte durch das Ausgangsmaterial erzeugt. Beim Strecken der Streckgitterstruktur werden die Stege und Knoten deformiert und es öffnen sich zwischen den Stegen und Knoten näherungsweise rautenförmige Durchbrüche, sogenannte Maschen. Durch die gestreckte Streckgitterstruktur hängen zwei benachbarte Elektrodenbereiche weiterhin zusammen und können gemeinsam zu weiteren Fertigungsschritten bewegt werden. Weitere Hilfsstrukturen können Bereiche des Ausgangsmaterials sein, die beispielsweise ebenfalls zum Transport der zusammenhängenden Elektrodenbereiche von Fertigungsschritt zu Fertigungsschritt benötigt werden, jedoch nicht Teil der Batteriezelle werden sollen. Die Hilfsstrukturen werden beim Vereinzeln der Elektrodenbereiche von den Elektrodenbereichen entfernt, um die Elektroden zu erhalten.

Die Elektrodenbereiche können voneinander getrennt werden, indem die Streckgitterstruktur zerrissen wird. Die Streckgitterstruktur kann so dünne Stege und Knoten aufweisen, dass Reste der Streckgitterstruktur nach dem Zerreißen an der Elektrode verbleiben können. Die Reste bestehen dabei aus so kleinen Partikeln, dass diese unproblematisch im Zellstapel verbleiben können. Durch das Zerreißen können die Elektrodenbereiche sehr einfach vereinzelt werden.

Die Elektrodenbereiche können voneinander getrennt werden, indem sie von der Streckgitterstruktur abgeschnitten werden. Die Streckgitterstruktur kann einfach durchtrennt werden, da die Stege sehr geringe Querschnitte aufweisen. Durch das Abschneiden können Partikelemissionen im Vergleich zum Abreißen verringert werden. Insbesondere kann durch den Schneidprozess eine kontrollierte Partikelemission erreicht werden.

Die Streckgitterstruktur kann in zumindest einen unbeschichteten Randbereich des Ausgangsmaterials geschnitten werden. Das Ausgangsmaterial kann beidseitig je einen Randbereich aufweisen. Im Randbereich ist kein Aktivmaterial angeordnet. Am Randbereich kann das Ausgangsmaterial gegriffen werden, ohne dabei einen Zugang für eine Bearbeitung des Aktivmaterials zu behindern. Am Randbereich können die Elektrodenbereiche gehalten werden und von Fertigungsschritt zu Fertigungsschritt transportiert werden.

Im Schritt des Strukturierens kann ferner eine Trennperforation in das Ausgangsmaterial geschnitten werden. Die Trennperforation kann eine zukünftige Kontur der Elektroden abbilden. Beim Vereinzeln kann die Trennperforation zerrissen werden, um einzelne Elektroden mit der Kontur zu erhalten. Eine Trennperforation kann aus entlang der Kontur nebeneinander angeordneten Schlitzen oder Löchern bestehen. Durch die Trennperforation wird das Ausgangsmaterial entlang der Kontur geschwächt und entlang der Trennperforation reißen.

Die Trennperforation kann in den Randbereich geschnitten werden. Der Randbereich kann zumindest teilweise abgerissen werden, um die Elektroden zu erhalten. Bis zum Fertigungsschritt des Vereinzelns können die Elektrodenbereiche unter Verwendung des Rands transportiert werden. Nach dem Vereinzeln wird der Randbereich nicht mehr benötigt und kann entfernt werden.

Die Trennperforation kann in einem Teilschritt des Strukturierens in das Ausgangsmaterial geschnitten werden, nachdem im Schritt des Streckens die Elektrodenbereiche auseinandergezogen worden sind. Der Schritt des Strukturierens kann in Teilschritten erfolgen. In einem ersten Teilschritt kann die Streckgitterstruktur strukturiert werden. Anschließend kann die Streckgitterstruktur gestreckt werden. Nachfolgend kann die Trennperforation in einem zweiten Teilschritt strukturiert werden. So kann verhindert werden, dass das an der Trennperforation geschwächte Ausgangsmaterial durch die Kräfte beim Strecken zerreißt. Zum nachfolgenden Transport von der Trennperforation zum nächsten Fertigungsschritt werden dann nur noch geringere Kräfte benötigt.

Die Trennperforation kann Umrisse von Kontaktfahnen der Elektroden abbilden. Die Umrisse der zumindest einen Kontaktfahne können so bedarfsgerecht ausgelegt werden. Die Doppelbenutzung des Randbereichs zum Transport von Fertigungsschritt zu Fertigungsschritt und als Materialvorrat für die Kontaktfahnen kann bei der Auslegung der Kontaktfahne unberücksichtigt bleiben. Die Umrisse können auch an Stellen angeordnet werden, an denen zuvor Kraft zum Strecken der Streckgitterstruktur in den Randbereich eingeleitet worden ist.

Der hier vorgestellte Ansatz schafft ferner eine Vorrichtung, die dazu ausgebildet ist, um die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder eine Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC (englisch: application specific integrated circuit) oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM (englisch: erasable programmable read only memory) oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen als Verfahren und Vorrichtung beschrieben sind. Die Merkmale können in geeigneter Weise kombiniert, angepasst oder ausgetauscht werden, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine schematische Darstellung einer Batteriezelle;
Die Figuren 2a bis 2d zeigen eine Abfolge von Herstellungsschritten zum Fließfertigen von Batterieelektroden gemäß einem Ausführungsbeispiel; und
Die Figuren 3a bis 3b zeigen eine Abfolge von ergänzenden Herstellungsschritten zum Fließfertigen von Batterieelektroden gemäß einem Ausführungsbeispiel.
Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

Mit anderen Worten finden in einem Akkumulator insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je ein Elektrodensubstrat beziehungsweise einen Stromableiter, auf welchem ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Graphit oder Silizium. Weist die Anode elementares Lithium auf, welches sich durch eine hohe Energiedichte auszeichnet und ist der Elektrolyt als Festkörper ausgeführt, spricht man von Lithium-Batterien beziehungsweise von Festkörperbatterien oder Post Lithium Ionen Technologie. Der hier vorgestellte Ansatz kann für beide Technologien Anwendung finden.

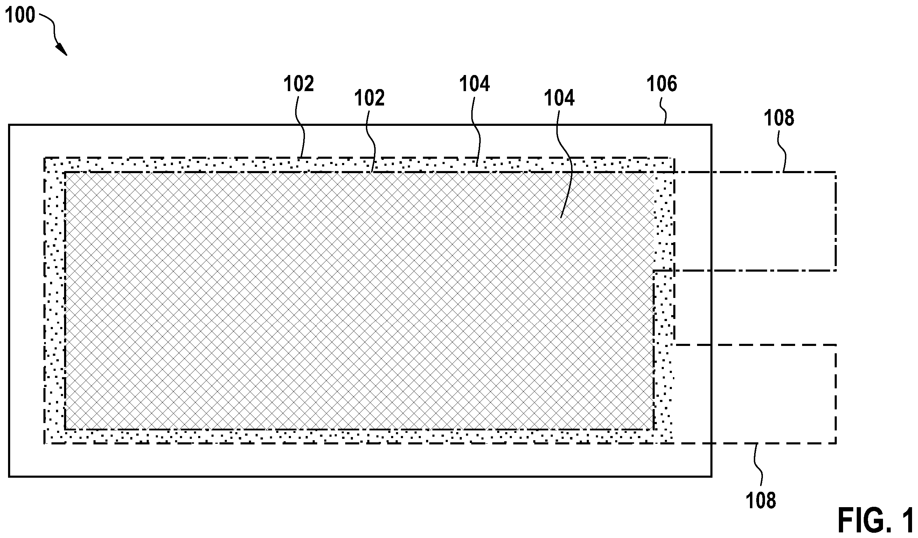

Fig. 1 zeigt eine schematische Darstellung einer Batteriezelle 100. Die Batteriezelle 100 ist ein Einzelbaustein einer Batterie. Die Batterie kann dabei in Abhängigkeit von der Zellchemie der Batteriezelle 100 eine Primärbatterie oder eine wieder aufladbare Sekundärbatterie sein. Die Batteriezelle 100 weist zwei Elektroden 102 mit Aktivmaterial 104 und einen zwischen den Elektroden 102 angeordneten Separator 106 auf. Eine der Elektroden 102 wirkt als Anode. Die andere Elektrode 102 wirkt als Kathode. Die Aktivmaterialien 104 von Anode und Kathode sind verschieden. Beide Elektroden 102 sind beidseitig mit dem Aktivmaterial 104 beschichtet.

Zur Ausbildung einer Batterie ist eine Mehrzahl von Elektroden 102 übereinander gestapelt. Dabei wechseln sich Anoden und Kathoden ab. Anode und Kathode sind beispielsweise auch unterschiedlich groß. Hier ist die Anode größer als die Kathode. Der Separator 106 ist größer als die Anode. Die Kathode wird beispielsweise umlaufend durch die Anode und den Separator 106 überragt. Die Elektroden 102 sind hier rechteckig. Beide Elektroden weisen als Kontur jeweils eine vorstehende Kontaktfahne 108 als Ableiter auf. Die Kontaktfahnen 108 sind nebeneinander an einer Schmalseite der Elektroden 102 angeordnet.

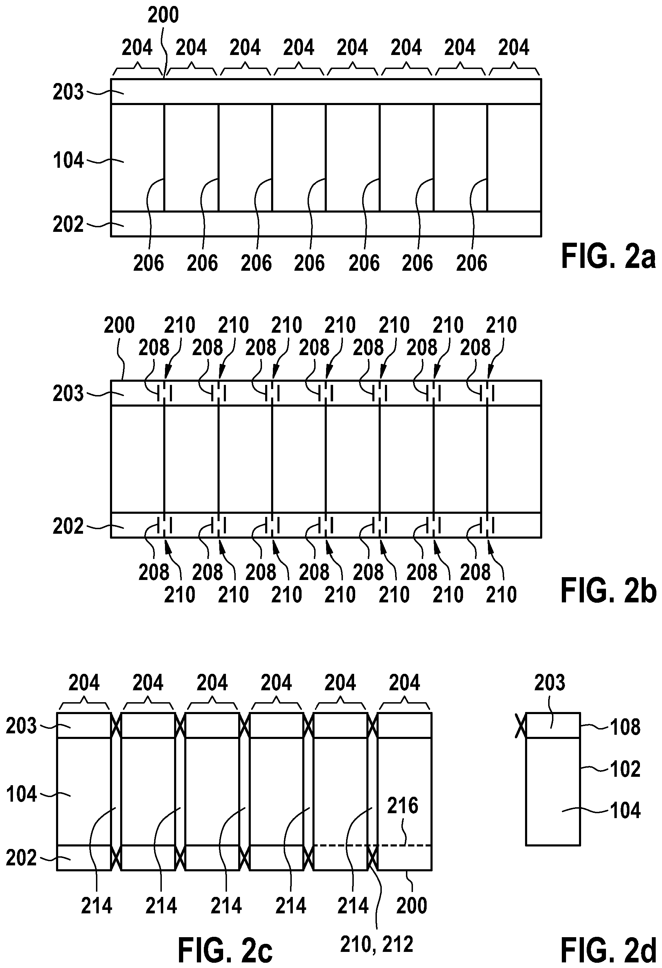

Die Figuren 2a bis 2d zeigen eine Abfolge von Herstellungsschritten zum Fließfertigen von Elektroden 102 gemäß einem Ausführungsbeispiel. Die Elektroden 102 können entweder der Anode oder der Kathode in Fig. 1 entsprechen. Die Elektroden 102 sind aus einem bandförmigen zumindest teilweise mit Aktivmaterial 104 beschichteten Ausgangsmaterial 200 hergestellt. Das Aktivmaterial 104 kann auf beiden Seiten des Ausgangsmaterials 200 angeordnet sein, damit auf jeder Seite der Elektrode 102 eine Batteriezelle ausgebildet werden kann. Das bandförmige Ausgangsmaterial 200 kann in beschichtetem Zustand von einer Rolle abgewickelt werden. Ebenso kann das bandförmige Ausgangsmaterial 200 vor den hier dargestellten Fertigungsschritten mit dem Aktivmaterial 104 beschichtet werden. Das Ausgangsmaterial 200 ist eine elektrisch leitende Folie, insbesondere eine Metallfolie. Hier ist das Aktivmaterial 104 in Form eines von zwei unbeschichteten Randbereichen 202 und 203 gesäumten Streifens auf das Ausgangsmaterial 200 aufgebracht.

In Fig. 2a ist dargestellt, wie das Aktivmaterial 104 in Elektrodenbereiche 204 strukturiert ist. Trennschnitte 206 durch das Aktivmaterial 104 und das Ausgangsmaterial 200 sind beispielsweise durch Laserschneiden oder mechanisches Schneiden eingebracht. Die Randbereiche 202 sind dabei nicht zerschnitten, sodass die einzelnen Elektrodenbereiche 204 fest zusammenhängen. Ein Trennschnitt 206 trennt jeweils zwei benachbarte Elektrodenbereiche 204 voneinander.

In Fig. 2b ist dargestellt, wie die Randbereiche 202 im Wesentlichen in Verlängerung der Trennschnitte 206 mit Einschnitten 208 für eine Streckgitterstruktur 210 strukturiert sind. Die Einschnitte 208 liegen dabei zumindest in zwei im Wesentlichen parallelen Reihen seitlich versetzt zueinander. Hier sind die Einschnitte 208 in drei Reihen seitlich versetzt zueinander angeordnet, um als Streckgitterstruktur 210 eine Kreuzstruktur zu erzeugen. Zwischen den Reihen entstehen Stege 212. Durch den Versatz der Einschnitte 208 entstehen Knoten, welche die Stege 212 verbinden.

In Fig. 2c ist dargestellt, wie die Elektrodenbereiche 204 auseinandergezogen sind. Die Streckgitterstrukturen 210 wurden dabei gestreckt und die Randbereiche 202 verlängert. Beim Strecken der Streckgitterstrukturen 210 haben sich die Einschnitte 208 zu Maschen geöffnet. Die Streifen 212 des Ausgangsmaterials 200 zwischen den Maschen sind plastisch dauerhaft verformt worden. Die Elektrodenbereiche 204 sind nach dem Auseinanderziehen durch einen permanenten Spalt 214 voneinander beabstandet. An den zusammenhängenden Randbereichen 202 können die Elektrodenbereiche 204 sicher und schnell von Fertigungsschritt zu Fertigungsschritt transportiert werden.

In Fig. 2d ist dargestellt, wie werden die Elektrodenbereiche 204 final vereinzelt sind. Hier sind die Streckgitterstrukturen 210 zerrissen oder zerschnitten, um die einzelnen Elektroden 102 zu trennen.

In einem Ausführungsbeispiel ist in Fig. 2c das Ausgangsmaterial 200 zwischen dem Randbereich 202 und dem Elektrodenbereich 204 zusätzlich mit einer Trennperforation 216 strukturiert. In Fig. 2d ist die Streckgitterstruktur 210 mit dem Randbereich 202 an der Trennperforation 216 abgerissen. Der andere Randbereich 203 bildet eine Kontaktfahne 108 zum elektrischen Kontaktieren der Elektrode 102 aus.

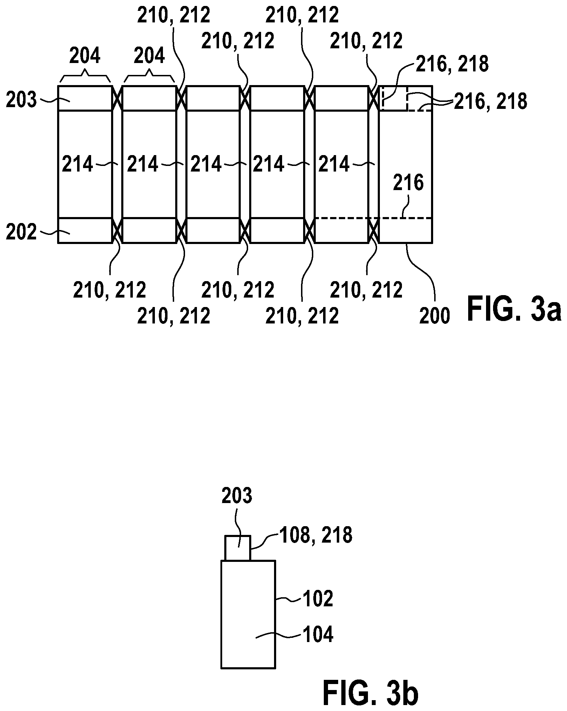

Die Figuren 3a bis 3b zeigen eine Abfolge von ergänzenden Herstellungsschritten zum Fließfertigen von Elektroden 102 gemäß einem Ausführungsbeispiel. Die Elektroden 102 können entweder der Anode oder der Kathode in Fig. 1 entsprechen und sind aus dem bandförmigen Ausgangsmaterial 200 hergestellt.

In Fig. 3a ist dargestellt, dass das Ausgangsmaterial 200 des Randbereichs 203 nach dem Auseinanderziehen der Elektrodenbereiche 204 und dem Strecken der Streckgitterstrukturen 210 mit zusätzlichen Trennperforationen 216 strukturiert ist. Die zusätzlichen Trennperforationen 216 bilden eine zukünftige Kontur 218 der Kontaktfahne 108 ab.

In Fig. 3b ist die endgültige Kontur 218 der Elektrode 102 dargestellt Die Trennperforationen 216 in beiden Randbereichen 202, 203 sind zerrissen. Durch das Abreißen des überschüssigen Ausgangsmaterials 200 der Randbereiche 202, 203 an den Trennperforationen 216 sind auch beide Streckgitterstrukturen 210 entfernt.

Mit anderen Worten zeigen die Figuren 2 und 3 den Ablauf eines Verfahrens zur Separation von Batterieelektroden aus einer durchgehend beschichteten Elektrodenbahn durch Ausnutzung der plastischen Verformbarkeit des Elektrodensubstrats beziehungsweise Stromableiters.

Diese Separation erfolgt vor einem Stapelprozess der Elektroden 102 und Separatoren aus kontinuierlich beziehungsweise durchgehend beschichteten Elektrodenbahnen, um einen elektrischen Kurzschluss der Anode und Kathode zu verhindern und den sich aus den elektrochemischen Eigenschaften ergebenden Anforderungen gerecht zu werden.

Bei dem hier vorgestellten Ansatz werden beide Elektroden 102 sowie der Separator als Bahnware komplett kontinuierlich verarbeitet. Die geometrisch kleinere Elektrode 102, hier die Kathode, wird nur im Bereich des Aktivmaterials 104 vollständig inklusive Substrat geschnitten. Der Substratrand wird partiell mit einer Streckstruktur perforiert und dient nachfolgend als tragende Struktur zum Transport der Bahnware.

Durch einen nachgelagerten Streckprozess, bei welchem die Eigenschaften der plastischen Verformbarkeit des Substrats ausgenutzt werden, wird die Separation der Bahnware im Bereich des Aktivmaterials 104 erreicht, ohne die Bahnware vollständig zu trennen. Hierdurch wird für die nachfolgenden Prozesse eine kontinuierliche Verarbeitung der Bahnware ermöglicht. Vor dem weiteren Stapelprozess kann die Streckstruktur durch einen Reißprozess getrennt und die Bahnware auf diese Weise vereinzelt werden. Etwaige nicht benötigte Strukturen der Folie können vor dem Reißprozess perforiert werden, um gemeinsam mit der Streckstruktur entfernt werden zu können.

Wenn die Reste der Streckstruktur entfernt werden sollen und/oder ein Ableiterfähnchen erstellt werden soll, ist dies ebenfalls mit einer Perforation möglich.

An den Elektroden können bei dem hier vorgestellten Ansatz typische Merkmale der Reste von Streckstrukturen an den Substraten verbleiben. Die Produktionsprozesse zur Erzeugung der Streckstruktur und der Prozess zur Streckung werden in der Batteriefertigung bisher nicht verwendet.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Fließfertigen von Elektroden (102) für eine Batterie, **dadurch gekennzeichnet, dass** ein bahnförmiges Ausgangsmaterial (200) bereitgestellt wird, in einem Schritt des Strukturierens zumindest eine Streckgitterstruktur (210) und ein Trennschnitt (206) in das Ausgangsmaterial (200) geschnitten werden, um benachbarte Elektrodenbereiche (204) zu definieren, wobei das Ausgangsmaterial (200) im Bereich der Streckgitterstruktur (210) teilweise ungeschnitten bleibt, in einem Schritt des Streckens die Elektrodenbereiche (204) auseinandergezogen werden, um die Streckgitterstruktur (210) zu strecken, und in einem Schritt des Vereinzelns die Elektrodenbereiche (204) an der Streckgitterstruktur (210) voneinander getrennt werden, um einzelne Elektroden (102) zu erhalten.

2. Verfahren gemäß Anspruch 1, bei dem im Schritt des Vereinzelns die Elektrodenbereiche (204) voneinander getrennt werden, indem die Streckgitterstruktur (210) zerrissen wird.

3. Verfahren gemäß Anspruch 1, bei dem im Schritt des Vereinzelns die Elektrodenbereiche (204) voneinander getrennt werden, indem sie von der Streckgitterstruktur (210) abgeschnitten werden.

4. Verfahren gemäß einem der vorhergehenden Ansprüche, bei dem im Schritt des Strukturierens die Streckgitterstruktur (210) in zumindest einen unbeschichteten Randbereich (202) des Ausgangsmaterials (200) geschnitten wird.

5. Verfahren gemäß einem der vorhergehenden Ansprüche, bei dem im Schritt des Strukturierens ferner eine Trennperforation (216) in das Ausgangsmaterial (200) geschnitten wird, wobei die Trennperforation (216) eine zukünftige Kontur der Elektroden (102) abbildet, wobei im Schritt des Vereinzelns die Trennperforation (216) zerrissen wird, um einzelne Elektroden (102) mit der Kontur zu erhalten.

6. Verfahren gemäß Anspruch 5, bei dem im Schritt des Strukturierens die Trennperforation (216) in einen unbeschichteten Randbereich (202, 203) des Ausgangsmaterials (200) geschnitten wird, wobei im Schnitt des Vereinzelns der Randbereich (202, 203) zumindest teilweise abgerissen wird, um die Elektroden (102) zu erhalten.

7. Verfahren gemäß einem der Schritte 5 bis 6, bei dem in einem Teilschritt des Strukturierens die Trennperforation (216) in das Ausgangsmaterial (200) geschnitten wird, nachdem im Schritt des Streckens die Elektrodenbereiche (204) auseinandergezogen worden sind.

8. Verfahren gemäß einem der Schritte 5 bis 7, bei dem im Schritt des Strukturierens die Trennperforation (216) Umrisse (218) von Kontaktfahnen (108) der Elektroden (102) abbildet.

9. Vorrichtung, die dazu ausgebildet ist, das Verfahren gemäß einem der vorhergehenden Ansprüche in entsprechenden Einrichtungen auszuführen, umzusetzen und/oder anzusteuern.

10. Computerprogrammprodukt, das dazu eingerichtet ist, das Verfahren gemäß einem der Ansprüche 1 bis 8 auszuführen, umzusetzen und/oder anzusteuern.

11. Maschinenlesbares Speichermedium, auf dem das Computerprogrammprodukt gemäß Anspruch 10 gespeichert ist.

## Claims

1. Method for the flow production of electrodes (102) for a battery, **characterized in that** a web-type starting material (200) is provided, in a structuring step at least one expanded lattice structure (210) and a separating cut (206) are cut into the starting material (200) in order to define adjacent electrode regions (204), wherein the starting material (200) remains partially uncut in the region of the expanded lattice structure (210), in a stretching step the electrode regions (204) are pulled apart in order to stretch the expanded lattice structure (210), and in a singulating step the electrode regions (204) at the expanded lattice structure (210) are separated from one other in order to obtain individual electrodes (102).

2. Method according to Claim 1, wherein in the singulating step the electrode regions (204) are separated from one other by the expanded lattice structure (210) being torn apart.

3. Method according to Claim 1, wherein in the singulating step the electrode regions (204) are separated from one other by being cut off from the expanded lattice structure (210).

4. Method according to any of the preceding claims, wherein in the structuring step the expanded lattice structure (210) is cut into at least one uncoated edge region (202) of the starting material (200).

5. Method according to any of the preceding claims, wherein in the structuring step furthermore a separating perforation (216) is cut into the starting material (200), wherein the separating perforation (216) represents a future contour of the electrodes (102), wherein in the singulating step the separating perforation (216) is torn in order to obtain individual electrodes (102) with the contour.

6. Method according to Claim 5, wherein in the structuring step the separating perforation (216) is cut into an uncoated edge region (202, 203) of the starting material (200), wherein in the singulating step the edge region (202, 203) is at least partially torn off in order to obtain the electrodes (102).

7. Method according to either of Steps 5 and 6, wherein in a structuring sub-step the separating perforation (216) is cut into the starting material (200) after the electrode regions (204) have been pulled apart in the stretching step.

8. Method according to any of Steps 5 to 7, wherein in the structuring step the separating perforation (216) represents outlines (218) of contact lugs (108) of the electrodes (102).

9. Apparatus designed to carry out, implement and/or control the method according to any of the preceding claims in corresponding devices.

10. Computer program product configured to carry out, implement and/or control the method according to any of Claims 1 to 8.

11. Machine-readable storage medium on which the computer program product according to Claim 10 is stored.

## Revendications

1. Procédé destiné à fabriquer à la chaîne des électrodes (102) pour une batterie, **caractérisé en ce qu'**un matériau de départ (200) en forme de piste est préparé, **en ce que**, lors d'une étape de structuration, au moins une structure de grille déployée (210) et une section de séparation (206) sont découpées dans le matériau de départ (200) pour définir des zones d'électrodes adjacentes (204), le matériau de départ (200) restant partiellement non découpé au voisinage de la structure de grille déployée (210), les zones (204) d'électrodes étant écartées les unes des autres lors d'une étape de déploiement pour déployer la structure de grille déployée (210), et les zones (204) d'électrodes étant séparées les unes des autres au niveau de la structure de grille déployée (210) lors d'une étape de séparation pour obtenir des électrodes (102) individuelles.

2. Procédé selon la revendication 1, dans lequel, lors de l'étape de séparation, les zones (204) d'électrodes sont séparées les unes des autres par déchirement de la structure de grille déployée (210).

3. Procédé selon la revendication 1, dans lequel, lors de l'étape de séparation, les zones (204) d'électrodes sont séparées les unes des autres par découpe de la structure de grille déployée (210).

4. Procédé selon l'une quelconque des revendications précédentes, dans lequel, lors de l'étape de structuration, la structure de grille déployée (210) est découpée dans au moins une zone de bord non revêtue (202) du matériau de départ (200).

5. Procédé selon l'une quelconque des revendications précédentes, dans lequel, lors de l'étape de structuration, une perforation de séparation (216) est en outre découpée dans le matériau de départ (200), la perforation de séparation (216) représentant un contour futur des électrodes (102), dans lequel, lors de l'étape de séparation, la perforation de séparation (216) est déchirée pour obtenir des électrodes (102) individuelles présentant ledit contour.

6. Procédé selon la revendication 5, dans lequel, lors de l'étape de structuration, la perforation de séparation (216) est découpée dans une zone de bord non revêtue (202, 203) du matériau de départ (200), dans lequel, lors de l'étape de séparation, la zone de bord (202, 203) est au moins partiellement arrachée pour obtenir les électrodes (102).

7. Procédé selon l'une quelconque des étapes 5 à 6, dans lequel, lors d'une sous-étape de l'étape de structuration, la perforation de séparation (216) est découpée dans le matériau de départ (200) après que les zones (204) d'électrodes ont été écartées les unes des autres lors de l'étape de déploiement.

8. Procédé selon l'une quelconque des étapes 5 à 7, dans lequel, lors de l'étape de structuration, la perforation de séparation (216) représente les contours (218) de pattes de contact (108) des électrodes (102).

9. Dispositif qui est conçu pour exécuter, mettre en œuvre et/ou piloter le procédé selon l'une quelconque des revendications précédentes dans des équipements correspondants.

10. Produit programme d'ordinateur, qui est conçu pour exécuter, mettre en œuvre et/ou piloter le procédé selon l'une quelconque des revendications 1 à 8.

11. Support de stockage lisible par machine sur lequel est stocké le produit programme d'ordinateur selon la revendication 10.
